# EUROPEAN PATENT APPLICATION

(11) **EP 4 425 938 A1**
(43) Date of publication of application: **04.09.2024**
(21) Application number: 23159612.3
(22) Date of filing: 02.03.2023
(51) Int. Cl.: H04N 21/43, H04N 21/44

(54) **METHOD FOR SYNCHRONIZING A PLURALITY OF MULTIMEDIA COMPONENTS, CORRESPONDING COMPUTER PROGRAM PRODUCT AND DEVICES**

(71) Applicant: Nagravision Sarl, 1033 Cheseaux-sur-Lausanne (CH)
(72) Inventor: CONUS, Joël, 1033 CHESEAUX-SUR-LAUSANNE (CH)
(74) Representative: Ipside

(57) **Abstract**

A method is proposed for synchronizing a plurality of multimedia components selected among audio and video components of a digital multimedia processed by a media player. Each of the multimedia component is rendered on a multimedia rendering device receiving the multimedia component from the media player through a respective path. The media player is configured to:
- obtaining (5420), for each multimedia rendering device, a delay data representative of a propagation delay of the multimedia component from the reception of the multimedia component to its rendering by the multimedia rendering device,
- determining (S450) a buffering delay representative of a difference between a maximum value and a minimum value among the delay data; and
providing (S460) the buffering delay to at least one buffer implemented along a path of the multimedia component corresponding to the minimum value among the delay data.

## Description

### 1. FIELD OF THE DISCLOSURE

The field of the disclosure is that of the processing of digital multimedia.

More specifically, the disclosure relates to the rendering of multimedia components selected among audio and video components of such digital multimedia processed by a media player.

The disclosure can be of interest in any field wherein such digital multimedia is processed by media-rendering devices. This is the case for instance in consumer equipment, e.g. with home theater systems, or professional equipment, e.g. in theaters.

### 2. TECHNOLOGICAL BACKGROUND

Synchronizing audio and video is a difficult task as media-rendering devices can take multiple forms and shapes. Video and audio take different paths within a device and can also be played by separate devices. Here are some examples:
- A TV plays video and the TV speakers play audio;
- A beamer/cinema projector plays video and an external amplifier plays audio to external speakers; and
- A phone plays video and Bluetooth headphones play audio.

These varied and complex environments, coupled with the inherent latency of the hardware, software, communication media and encryption/encoding formats, makes it a real challenge to synchronize audio and video. Digital displays tend to be slow, which means that audio might come to the user before the video. Audio codecs implemented with Bluetooth connexions tend to be slow (e.g. about 70ms for aptX and about 220ms for the Sub-Band Codec (SBC)) so the audio is likely to come to the user after the video.

Another physical constraint for perfect synchronization is the fact that light (video) travels extremely fast (299792458 m/s) but audio waves travel rather slowly (about 343 m/s). This typically means that, using a single source for both audio and video, the audio will lose about three milliseconds compared to video for each meter of distance between the source and the user. Sitting at four meters from the TV screen (with internal speakers) and with perfectly synchronized signals at the source, the audio will reach the user about 12ms after the video.

Viewers will typically not notice a delay of a few tens of milliseconds but beyond that the delay becomes an annoyance. Obviously, the delays induced by every component in the chain add up and can quickly get noticeable.

There is thus a need for a method that allows synchronizing multimedia components selected among audio and video components processed by multimedia rendering devices.

### 3. SUMMARY

A particular aspect of the present disclosure relates to a method for synchronizing a plurality of multimedia components rendered on at least two multimedia rendering devices. The multimedia component is selected among audio and video components of a digital multimedia processed by a media player. Each of the multimedia component is rendered on a multimedia rendering device receiving the multimedia component from the media player through a respective path. According to such method, the media player is configured to:
- obtaining, for each multimedia rendering device, a delay data representative of a propagation delay of the multimedia component from the reception of the multimedia component to the physical rendering of the multimedia component by the multimedia rendering device;
- determining at least one buffering delay representative of a difference between a maximum value and a minimum value among the delay data of the plurality of delay data; and
- providing the buffering delay to at least one buffer implemented along a path of the multimedia component corresponding to the minimum value among the delay data of the plurality of delay data.

Thus, the present disclosure proposes a new and inventive solution for synchronizing the multimedia components processed and rendered by multimedia rendering devices.

More particularly, having the media player that collects the delay experienced by the audio and video components along the different paths up to the respective rendering devices allows buffering the signal along the path having a minimum delay for resynchronization with the path having the maximum delay.

In some embodiments, at least one multimedia processing device is implemented along the path between the multimedia rendering device and the media player. The delay data obtained by the media player represents the propagation delay between the reception of the multimedia component by the multimedia processing device to the physical rendering of the multimedia component by the multimedia rendering device.

In some embodiments, the delay data obtained by the media player is the sum of the delay of the multimedia rendering device and the delay of the at least one multimedia processing device.

In some embodiments, the obtaining the delay data comprises:
- receiving, from the multimedia processing device, the delay of the multimedia rendering device and the delay of the at least one multimedia processing device; and
- summing the delay of the multimedia rendering device and the delay of the at least one multimedia processing device delivering the delay data.

In some embodiments, the obtaining the delay data comprises receiving the delay data sent by the multimedia rendering device.

In some embodiments, the obtaining the delay data comprises receiving the delay data sent by a multimedia processing device.

In some embodiments, the obtaining the delay data comprises receiving the delay data sent by the multimedia processing device the most upstream along the path between the multimedia rendering device and the media player.

In some embodiments, the at least one buffer is implemented in the media player.

In some embodiments, the at least one buffer is implemented in a multimedia processing device along the path of the multimedia component corresponding to the minimum value among the delay data of the plurality of delay data. The providing the buffering delay comprises sending the buffering delay to the multimedia processing device along the path of the multimedia component corresponding to the minimum value.

In some embodiments, the at least one buffer is implemented in the multimedia rendering device receiving the multimedia component through the path corresponding to the minimum value among the delay data of the plurality of delay data. The providing the buffering delay comprises sending the buffering delay to the multimedia rendering device receiving the multimedia component through the path corresponding to the minimum value.

In some embodiments, for at least one audio rendering device, the media player is configured to:
- obtaining an additional delay data representative of a sound propagation delay from the audio rendering device up to a user experiencing the multimedia; and
- adding the additional delay data to the delay data representative of a propagation delay of an audio component from the reception of the audio component to the physical rendering of the audio component by the audio rendering device delivering an updated delay data.

The buffering delay is determined as representative of a difference between the maximum value and the minimum value among the delay data of the plurality of delay data comprising the updated delay data in place of the delay data representative of the propagation delay of the audio component from the reception of the audio component to the physical rendering of the audio component by the audio rendering device.

In some embodiments, the determining and the providing are executed iteratively, the minimum value among the delay data of the plurality of delay data used for a given iteration being canceled from the plurality of delay data for delivering an updated plurality of delay data used for the next iteration of the determining and the providing.

Thus, all the paths are resynchronized relative to the path having the maximum delay.

Another aspect of the present disclosure relates to a computer program product comprising program code instructions for implementing the above-mentioned method for synchronizing a plurality of multimedia components (in any of the different embodiments discussed above), when said program is executed on a computer or a processor.

Another aspect of the present disclosure relates to an electronic device configured for implementing all or part of the steps of the above-mentioned method for synchronizing a plurality of multimedia components (in any of the different embodiments discussed above). Thus, the features and advantages of this device are the same as those of the corresponding steps of said method. Therefore, they are not detailed any further.

Another aspect of the present disclosure relates to a media player comprising an electronic device as discussed above (in any of the different embodiments discussed above).

Another aspect of the present disclosure relates to multimedia rendering device comprising an input to receive a multimedia component and an output for rendering the multimedia component. The multimedia rendering device having a propagation delay representative of a maximum propagation delay of the multimedia component from the reception of the multimedia component to the rendering of the multimedia component. The multimedia rendering device comprises a memory to store the propagation delay and a processor or a dedicated computing machine configured to transmit the propagation delay to a multimedia component source connectable to the input in order to participate to a synchronization of a plurality of multimedia components rendered on a plurality of multimedia rendering devices.

### 4. LIST OF FIGURES

Other features and advantages of embodiments shall appear from the following description, given by way of indicative and non-exhaustive examples and from the appended drawings, of which:
- Figure 1 illustrates multimedia rendering devices receiving multimedia components of a digital multimedia processed by a media player according to one embodiment of the present disclosure;
- Figure 2 illustrates an example of the structural blocks of an electronic device allowing all or part of the steps of the method of Figure 4 to be executed by a master electronic device implemented e.g. in the media player of Figure 1;
- Figure 3 illustrates an example of the structural blocks of an electronic device allowing all or part of the steps of the method of Figure 4 to be executed by a slave electronic device implemented e.g. in the audio or video rendering device of Figure 1;
- Figure 4 illustrates the steps of a method for synchronizing a plurality of multimedia components of a digital multimedia processed by the media player of Figure 1 according to one embodiment of the present disclosure.

### 5. DETAILED DESCRIPTION

In all of the Figures of the present document, the same numerical reference signs designate similar elements and steps.

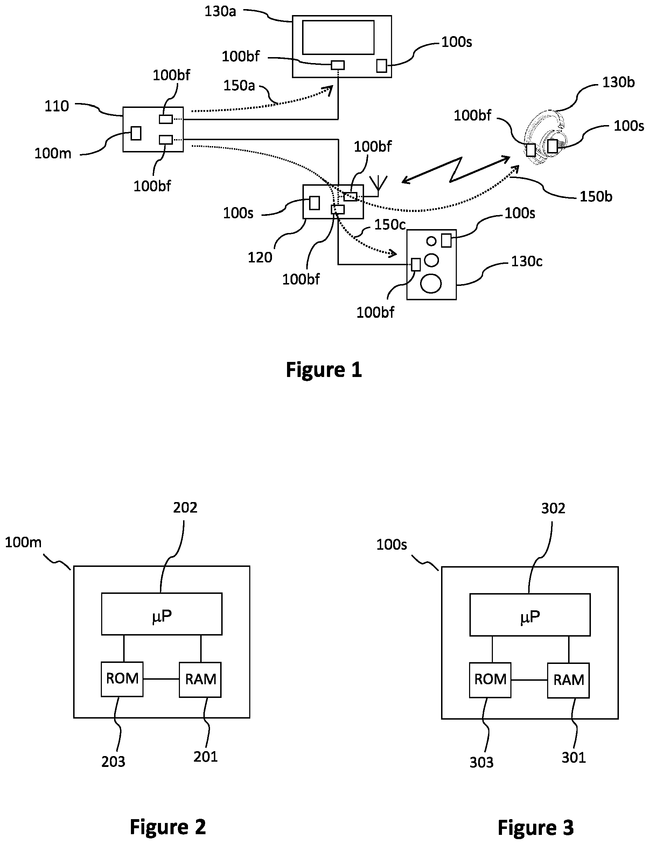

Referring now to **Figure 1****,** we describe multimedia rendering devices 130a, 130b, 130c receiving multimedia components of a digital multimedia processed by a media player 110 according to one embodiment of the present disclosure.

More particularly, a first multimedia rendering device is an audio/video rendering device 130a which takes the form of a TV, a second multimedia rendering device is an audio rendering device 130b which takes the form of a Bluetooth headset and a third multimedia rendering device is another audio rendering device 130c which takes the form of an active hi-fi speaker. The multimedia rendering devices 130a, 130b, 130c are part of a home theater system. However, in other embodiments, other types of multimedia rendering devices are considered, e.g. in professional rendering environments like in theaters.

Back to Figure 1, the media player 110 (e.g. a Blu-ray or DVD player, a set-top box) processes a digital multimedia and provides:
- the audio and video components of a digital multimedia to the first multimedia rendering device 130a; and
- the audio component of a digital multimedia to a multimedia processing device 120, e.g. an audio decoder, which in turn provides the audio component to the second multimedia rendering device 130b and to the third multimedia rendering device 130c.

Each of the multimedia rendering devices 130a, 130b, 130c receives the respective multimedia component from the media player 110 through a respective path 150a, 150b, 150c. More particularly:
- the first multimedia rendering device 130a receives the audio and video components of the digital multimedia from the media player 110 through a first path 150a;
- the second multimedia rendering device 130b receives the audio component of the digital multimedia from the media player 110 through a second path 150b; and
- the third multimedia rendering device 130c receives the audio component of the digital multimedia from the media player 110 through a third path 150c.

The first path 150a is a direct path in that the first multimedia rendering device 130a receives the audio and video components directly from the media player 110. Conversely, the second path 150b and the third path 150c are indirect paths in that they go through the multimedia processing device 120 before going to the second multimedia rendering device 130b and to the third multimedia rendering device 130c.

However, in some embodiments, there is no multimedia processing device 120 implemented in such system and the media player 110 directly provides the audio component of a digital multimedia to the multimedia rendering devices 130a, 130b, 130c.

In some embodiments, there is a plurality of multimedia processing devices 120 implemented along a given path 150a, 150b, 150c between the media player 110 and a given multimedia rendering device 130a, 130b, 130c. In such configuration, the given path 150a, 150b, 150c is an indirect path in that it goes successively through the different multimedia processing devices 120 before going to the given multimedia rendering device 130a, 130b, 130c.

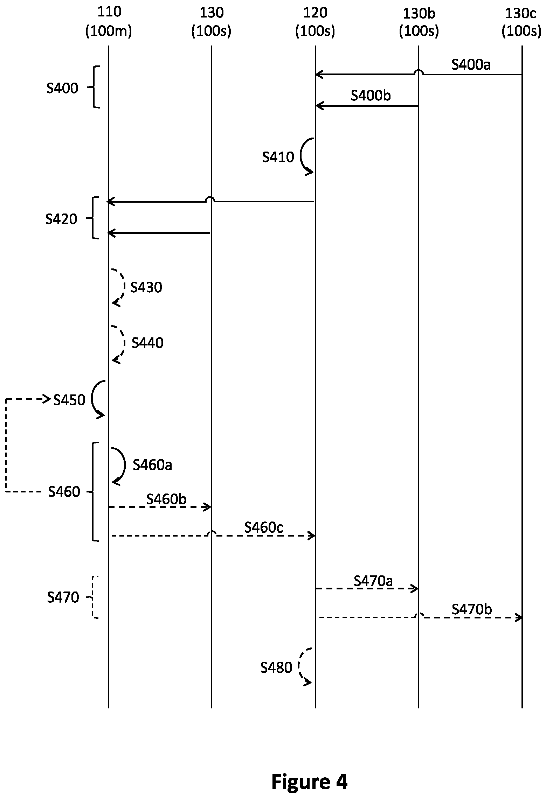

Back to Figure 1, the propagation delay of the multimedia component from the reception of the multimedia component (e.g. the audio or video component) by the media player 110 to the physical rendering of the multimedia component by the multimedia rendering device 130a, 130b, 130c is different along the different paths 150a, 150b, 150c. For synchronizing a plurality of multimedia components, the media player 110 comprises an electronic device 100m allowing to execute the respective steps of the method for synchronizing a plurality of multimedia components described below in relation with Figure 4. Conversely, the multimedia rendering device 130a, 130b, 130c and the multimedia processing device 120 comprise an electronic device 100s allowing to execute the respective steps of the method for synchronizing a plurality of multimedia components described below in relation with Figure 4.

More particularly, in order to be able to implement the respective steps of the method discussed below (method for synchronizing a plurality of multimedia components) in the various embodiments disclosed in relationship with Figure 4, in some embodiments the device 100m comprises (Figure 2):
- a non-volatile memory 203 (e.g. a read-only memory (ROM), a hard disk, a flash memory, etc.);
- a volatile memory 201 (e.g. a random-access memory or RAM) and a processor 202.

The non-volatile memory 203 is a non-transitory computer-readable carrier medium. It stores executable program code instructions, which are executed by the processor 202 in order to enable implementation of the respective steps of the method described below (method for synchronizing a plurality of multimedia components) in the various embodiments disclosed below in relationship with Figure 4.

Upon initialization, the aforementioned program code instructions are transferred from the non-volatile memory 203 to the volatile memory 201 so as to be executed by the processor 202. The volatile memory 201 likewise includes registers for storing the variables and parameters required for this execution.

Conversely, in order to be able to implement the respective steps of the method discussed below (method for synchronizing a plurality of multimedia components) in the various embodiments disclosed in relationship with Figure 4, in some embodiments the device 100s comprises (Figure 3):
- a non-volatile memory 303 (e.g. a read-only memory (ROM), a hard disk, a flash memory, etc.);
- a volatile memory 301 (e.g. a random-access memory or RAM) and a processor 202.

The non-volatile memory 303 is a non-transitory computer-readable carrier medium. It stores executable program code instructions, which are executed by the processor 302 in order to enable implementation of the respective steps of the method described below (method for synchronizing a plurality of multimedia components) in the various embodiments disclosed below in relationship with Figure 4.

Upon initialization, the aforementioned program code instructions are transferred from the non-volatile memory 303 to the volatile memory 301 so as to be executed by the processor 302. The volatile memory 301 likewise includes registers for storing the variables and parameters required for this execution.

The steps of the method for synchronizing a plurality of multimedia components may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

As discussed below in relation with Figure 4, the present method for synchronizing a plurality of multimedia components relies on the determination and implementation of one (or more) delay for delaying the multimedia component along the path 150a, 150b, 150c having the lowest delay value. For that, at least one device among the media player 110, the multimedia rendering device 130a, 130b, 130c and the multimedia processing device 120 comprises a buffer 100bf for buffering the fastest multimedia component stream to induce a playback delay, which will ensure that the fastest stream aligns on the slowest one.

Furthermore, as discussed below in relation with the step S400 of Figure 4, in some embodiments, the multimedia rendering devices 130a, 130b, 130c are configured to send their propagation delays to a multimedia component source (e.g. the multimedia processing device 120) connectable to the input of the multimedia rendering device 130a, 130b, 130c. Thus, such multimedia rendering device 130a, 130b, 130c comprises an input to receive a multimedia component and an output for rendering the multimedia component (e.g. a TV screen, an acoustic membrane of a speaker). Such multimedia rendering device 130a, 130b, 130c has a propagation delay representative of a propagation delay (e.g. a maximum propagation delay) of the multimedia component from the reception of the multimedia component to the rendering of the multimedia component. Such multimedia rendering device 130a, 130b, 130c comprises a memory 301, 303 to store the propagation delay and a processor 302 or a dedicated computing machine configured to transmit the propagation delay to the multimedia component source connectable to the input. This allows participating to the synchronization of the multimedia components rendered on the multimedia rendering devices 130a, 130b, 130c.

Referring now to **Figure 4****,** we describe the steps of a method for synchronizing a plurality of multimedia components of the digital multimedia processed by the media player 110 according to one embodiment of the present disclosure.

More particularly, in a **step S400,** the multimedia processing device 120 receives the propagation delay of the second multimedia rendering device 130b and of the third multimedia rendering device 130c. As discussed above, such propagation delay is representative of a propagation delay of the multimedia component from the reception of the multimedia component to the rendering of the multimedia component (such delay comprises e.g. the processing delay, the delay due to the physical implementation of the processing, etc.). More particularly:
- in a **step S400a,** the multimedia processing device 120 receives the delay of the third multimedia rendering device 130c. Conversely, during the step S400a, the third multimedia rendering device 130c sends its delay to the multimedia processing device 120, e.g. following a communications protocol executed both in the electronic devices 100s implemented in the multimedia processing device 120 and in the third multimedia rendering device 130c (e.g. a Bluetooth protocol, an ethernet protocol, a Wi-Fi protocol); and
- in a **step S400b,** the multimedia processing device 120 receives the delay of the second multimedia rendering device 130b. Conversely, during the step S400b, the second multimedia rendering device 130b sends its delay to the multimedia processing device 120, e.g. following a communications protocol executed both in the electronic devices 100s implemented in the multimedia processing device 120 and in the second multimedia rendering device 130b (e.g. a Bluetooth protocol, an ethernet protocol, a Wi-Fi protocol).

In a **step S410,** the multimedia processing device 120 adds its own processing delay (e.g. the processing delay, the delay due to the physical implementation of the processing, etc.) to the maximum delay among the delays of the second multimedia rendering device 130b and of the third multimedia rendering device 130c, delivering a delay data representative of the maximum delay experienced by the multimedia component along the second path 150b or along the third path 150c. This corresponds to a tree-like approach, where each branch (the multimedia processing device 120 in the present case) computes the maximum delay for all its leaves (the multimedia rendering devices 130b, 130c in the present case) and provides the result to the trunk. Such tree-like approach may be recursive when a plurality of multimedia processing device 120 are implemented along a given path 150a, 150b or 150c, with all or part of the multimedia processing device 120 belonging to different paths in addition of the given path. In such case, a given multimedia processing device 120 computes the maximum delay for all its leaves (i.e. the devices downstream the given multimedia processing device 120 along the paths the given multimedia processing device 120 belongs to) and provides the result to the trunk (i.e. the devices upstream the given multimedia processing device 120 along the paths the given multimedia processing device 120 belongs to).

In a **step S420,** the media player 110 obtains the delay data determined by the multimedia processing device 120. More particularly, in the present embodiment, the multimedia processing device 120 sends the delay data obtained during step S410 to the media player 110. Conversely, during step S420, the media player 110 receives the delay data sent by the multimedia processing device 120. This can be achieved e.g. following a communications protocol executed both in the electronic devices 100s implemented in the multimedia processing device 120 and the electronic devices 100m implemented in the media player 110 (e.g. a Bluetooth protocol, an ethernet protocol, a Wi-Fi protocol). However, in some embodiments, in step S420 the media player 110:
- receives, from the multimedia processing device 120, on one hand, the maximum delay among the delays of the second multimedia rendering device 130b and of the third multimedia rendering device 130c and, on the other hand, the delay of the multimedia processing device 120; and
- sums the delay of the multimedia rendering device 120 and the maximum delay.

In some embodiments, in step S420 the media player 110:
- receives, from the multimedia processing device 120, both the delays of the second multimedia rendering device 130b and of the third multimedia rendering device 130c and the delay of the multimedia processing device 120; and
- sums the delay of the multimedia rendering device 120 and the maximum delay between the received delays of the second multimedia rendering device 130b and of the third multimedia rendering device 130c.

Back to Figure 4, during step S420, the media player 110 also receives, from the first rendering device 130a, a delay data representative of the propagation delay of the multimedia component from the reception of the multimedia component to the physical rendering of the multimedia component by the first rendering device 130a (such delay comprises e.g. the processing delay, the delay due to the physical implementation of the processing, etc.).

However, in some embodiments discussed above in relation with Figure 1 wherein there is a plurality of multimedia processing devices 120 implemented along a given path 150a, 150b or 150c between the media player 110 and a respective multimedia rendering device 130a, 130b or 130c, the media player 110 obtains the delay data associated to the given path 150a, 150b or 150c from one of the multimedia processing devices 120 of the plurality. For instance, it may be the multimedia processing devices 120 the most upstream along the given path 150a, 150b or 150c (i.e. the multimedia processing devices 120 the closest to the media player 110 along the given path 150a, 150b or 150c) that collects the propagation delays of both the different multimedia processing devices 120 of the plurality and of the respective multimedia rendering device 130a, 130b or 130c. In such case, the multimedia processing devices 120 that received the delays obtains the delay data associated to the given path 150a, 150b or 150c e.g. by summing the different delays that have been received with its own processing delay. Alternatively, the multimedia processing devices 120 may send the delays to the media player 110 that in turn performs the sum as detailed above. In some implementations, the transmission of the delays along the given path 150a, 150b or 150c up to the media player 110 may be performed through successive transmission of the respective delays from one multimedia processing devices 120 to the next one, e.g. starting from the multimedia processing devices 120 the most downstream along the given path 150a, 150b or 150c (i.e. the multimedia processing devices 120 the closest to the considered respective multimedia rendering device 130a, 130b or 130c) to the multimedia processing devices 120 the most upstream along the given path 150a, 150b or 150c (i.e. the multimedia processing devices 120 the closest to the media player 110).

In other embodiments discussed above in relation with Figure 1 wherein there is no multimedia processing device 120 implemented along any path 150a, 150b, 150c, the media player 110 receives the delay data directly from the different multimedia rendering devices 130a, 130b, 130c.

Thus, during step S420 the media player 110 receives, for each multimedia rendering device 130a, 130b, 130c, a delay data representative of a propagation delay of the multimedia component from the reception of the multimedia component (by the multimedia rendering device 130a, 130b or 130c, or by a multimedia processing devices 120 along a respective path in this case) to the physical rendering of the multimedia component by the multimedia rendering device 130a, 130b or 130c. At the output of the step S420, we thus get a plurality of delay data. In particular, in the embodiment of Figure 4 such delay data represents:
- the propagation delay between the reception of the multimedia component by the multimedia processing device 120 to the physical rendering of the multimedia component by the second rendering device 130b or by the third rendering device 130c; or
- the propagation delay between the reception of the multimedia component by the first rendering device 130a to the physical rendering of the multimedia component by the first rendering device 130a.

In a step **S430,** the media player 110 obtains, for at least one audio rendering device, an additional delay data representative of a sound propagation delay from the audio rendering device up to a user experiencing the multimedia.

In the present case, such step may be executed for the third multimedia rendering device 130c which takes the form of an active hi-fi speaker or for the first multimedia rendering device 130a which takes the form of a TV. For instance, the additional delay data may be guessed (e.g. if the video rendering device is a 65inch TV so the user must be sitting at about 4 meters. If it's a phone so the user's ears are 50cm away. The additional delay data can be guessed based on such hypothesis and knowing the speed of sound waves in the air). Alternatively, the additional delay data may be declared or measured (e.g. as in some home cinema amplifiers that use multiple speakers for surround sound).

Back to Figure 4, in a **step S440,** the media player 110 adds, for the considered audio rendering device 130a or 130c, the additional delay data to the delay data representative of a propagation delay of the audio component from the reception of the audio component to the physical rendering of the audio component by the audio rendering device 130a or 130c. At the output of step S440, we get an updated delay data. The plurality of delay data is updated with the updated delay data put in place of the original delay data representative of the propagation delay of the audio component from the reception of the audio component to the physical rendering of the audio component by the considered audio rendering device 130a or 130c. However, in some embodiments, the steps S430 and S440 are not executed, e.g. when the sound propagation delay is negligible as may be for a headset.

Back to Figure 4, in a **step S450,** the media player 110 determines a buffering delay representative of a difference between a maximum value and a minimum value among the delay data of the plurality of delay data.

In a **step S460,** the media player 110 provides the buffering delay to a buffer 100bf implemented along a path 150a, 150b or 150c of the multimedia component corresponding to the minimum value among the delay data of the plurality of delay data.

For instance, such buffer 100bf may be implemented in the media player 110. In that case, in a **step S460a,** the electronic device 100m provides the buffering delay to the buffer 100bf implemented in the media player 110 along the path 150a, 150b or 150c corresponding to said minimum value.

In some embodiments, such buffer 100bf may be implemented in the multimedia rendering device 130a, 130b or 130c receiving the multimedia component through the path 150a, 150b or 150c corresponding to said minimum value. In that case, in a **step S460b,** the media player 110 sends the buffering delay to the multimedia rendering device 130a, 130b or 130c receiving the multimedia component through the path 150a, 150b or 150c corresponding to said minimum value.

In other embodiments, such buffer 100bf may be implemented in a multimedia processing device 120 along the path of the multimedia component corresponding to said minimum value. In that case, in a **step S460c,** the media player 110 sends the buffering delay to said multimedia processing device, e.g. to the multimedia processing device 120 along the second path 150b and the third path 150c.

In yet other embodiments wherein said minimum value corresponds to the second path 150b or to the third path 150c, such buffer 100bf may be implemented in the respective multimedia rendering device 130b or 130c. In such cases, in a **step S460c,** the media player 110 sends the buffering delay to the multimedia processing device 120 along the second path 150b and the third path 150c. In turn, in a **step S470,** the multimedia processing device 120 sends the buffering delay to at least one of the multimedia rendering devices 130b or 130c corresponding to said minimum value. For instance:
- in a **step S470a,** the multimedia processing device 120 sends the buffering delay to the second multimedia rendering device 130b. Conversely, during the step S470a, the multimedia rendering device 130b receives the buffering delay from the multimedia processing device 120, e.g. following a communications protocol executed both in the electronic devices 100s implemented in the multimedia processing device 120 and in the first audio rendering device 130b (e.g. a Bluetooth protocol, an ethernet protocol, a Wi-Fi protocol); and/or
- in a **step S470b,** the multimedia processing device 120 sends the buffering delay to the third multimedia rendering device 130c. Conversely, during the step S470b, the multimedia rendering device 130c receives the buffering delay from the multimedia processing device 120, e.g. following a communications protocol executed both in the electronic devices 100s implemented in the multimedia processing device 120 and in the third multimedia rendering device 130c (e.g. a Bluetooth protocol, an ethernet protocol, a Wi-Fi protocol).

The different transmissions of the buffering delays disclosed above in relation with steps S460 and S470 can be achieved e.g. following a communications protocol executed both in the electronic devices 100s, implemented in the multimedia processing device 120 and in the multimedia rendering devices 130a, 130b, 130c, and in the electronic devices 100m implemented in the media player 110 (e.g. a Bluetooth protocol, an ethernet protocol, a Wi-Fi protocol).

In some embodiments, in a **step S480,** the multimedia processing device 120 implements a different delay in different buffers 100bf implemented along different paths 150b, 150c the multimedia processing device 120 belongs to. This is done e.g. for having the propagation delay of the multimedia component from the multimedia processing device 120 to the multimedia rendering devices 130b, 130c receiving the multimedia component through the different paths 150b, 150c to be equal.

Thus, in case a given path splits from the multimedia processing device 120 into a plurality of different paths 150b, 150c going to different multimedia rendering devices 130b, 130c, the multimedia processing device 120 compensate for the difference in the delays along the different paths 150b, 150c.

In some embodiments, the media player 110 provides the buffering delay to a plurality of buffers 100bf implemented along different paths corresponding to said minimum value, e.g. when the different paths correspond to a same minimum value.

In the present embodiment, the plurality of delay data considered during the execution of the steps S450 and S460 is the updated plurality of delay data delivered in step S440. However, in some embodiments, the steps S430 and S440 are not executed and during the execution of steps S450 and S460, the buffering delay is based on the plurality of delay data received during step S420.

Back to Figure 4, the step S450 and the step S460 are executed iteratively, the minimum value among the delay data of the plurality of delay data used for a given iteration being canceled from the plurality of delay data for delivering an updated plurality of delay data used for the next iteration of the step S450 and of the step S460.

Thus, all the paths are resynchronized relative to the path having the maximum delay.

However, in some embodiments, the step S450 and the step S460 are not executed iteratively, e.g. when only two different values of delay data exist for the different paths (e.g. one value for the video path(s) and one for the audio path(s)). In such embodiments, only the path(s) with the minimum delay is compensated.

In some embodiment, the above-mentioned method for synchronizing a plurality of multimedia components (in any of the different embodiments discussed above) is executed responsive to a change in the configuration of the system rendering the multimedia components, e.g. the system of Figure 1. For instance, said method is executed each time a new multimedia rendering device 130a, 130b, 130c is connected, directly or indirectly, to the media player 110, or each time a multimedia rendering device 130a, 130b, 130c is disconnected from the media player 110.

## Claims

1. Method for synchronizing a plurality of multimedia components rendered on at least two multimedia rendering devices (130a, 130b, 130c), said multimedia component being selected among audio and video components of a digital multimedia processed by a media player (110), each of the multimedia component being rendered on a multimedia rendering device (130a, 130b, 130c) receiving the multimedia component from the media player through a respective path (150a, 150b, 150c),
**characterized in that** the media player is configured to:
- obtaining (S420), for each multimedia rendering device, a delay data representative of a propagation delay of the multimedia component from the reception of the multimedia component to the physical rendering of the multimedia component by the multimedia rendering device;
- determining (S450) at least one buffering delay representative of a difference between a maximum value and a minimum value among the delay data of the plurality of delay data; and
- providing (S460) the buffering delay to at least one buffer (100bf) implemented along a path of the multimedia component corresponding to the minimum value among the delay data of the plurality of delay data.

2. The method according to claim 1, wherein at least one multimedia processing device (120) is implemented along the path between the multimedia rendering device and the media player, said delay data obtained by the media player representing the propagation delay between the reception of the multimedia component by the multimedia processing device to the physical rendering of the multimedia component by the multimedia rendering device.

3. The method according to claim 2, wherein the delay data obtained by the media player is the sum of the delay of the multimedia rendering device and the delay of the at least one multimedia processing device.

4. The method according to any of the claims 1 to 3, wherein said obtaining the delay data comprises:
- receiving, from the multimedia processing device, the delay of the multimedia rendering device and the delay of the at least one multimedia processing device; and
- summing the delay of the multimedia rendering device and the delay of the at least one multimedia processing device delivering the delay data.

5. The method according to any of the claims 1 to 3, wherein said obtaining the delay data comprises receiving the delay data sent by the multimedia rendering device.

6. The method according to claim 2 or 3, wherein said obtaining the delay data comprises receiving the delay data sent by a multimedia processing device.

7. The method according to claim 2 or 3, wherein said obtaining the delay data comprises receiving the delay data sent by the multimedia processing device the most upstream along the path between the multimedia rendering device and the media player.

8. The method according to any of the claims 1 to 7, wherein the at least one buffer is implemented in the media player.

9. The method according to any of the claims 2 to 7, wherein the at least one buffer is implemented in a multimedia processing device along the path of the multimedia component corresponding to the minimum value among the delay data of the plurality of delay data,
said providing the buffering delay comprising sending (S460c) the buffering delay to the multimedia processing device along the path of the multimedia component corresponding to the minimum value.

10. The method according to any of the claims 1 to 7, wherein the at least one buffer is implemented in the multimedia rendering device receiving the multimedia component through the path corresponding to the minimum value among the delay data of the plurality of delay data,
said providing the buffering delay comprising sending (S460b) the buffering delay to the multimedia rendering device receiving the multimedia component through the path corresponding to the minimum value.

11. The method according to any of the claims 1 to 10, wherein, for at least one audio rendering device, the media player is configured to:
- obtaining (S430) an additional delay data representative of a sound propagation delay from the audio rendering device up to a user experiencing the multimedia; and
- adding (S440) the additional delay data to the delay data representative of a propagation delay of an audio component from the reception of the audio component to the physical rendering of the audio component by the audio rendering device delivering an updated delay data,
said buffering delay being determined as representative of a difference between the maximum value and the minimum value among the delay data of the plurality of delay data comprising the updated delay data in place of the delay data representative of the propagation delay of the audio component from the reception of the audio component to the physical rendering of the audio component by the audio rendering device.

12. Method according to any of the claims 1 to 11, wherein said determining and said providing are executed iteratively, the minimum value among the delay data of the plurality of delay data used for a given iteration being canceled from the plurality of delay data for delivering an updated plurality of delay data used for the next iteration of said determining and said providing.

13. Computer program product **characterized in that** it comprises program code instructions for implementing a method according to any of the claims 1 to 12.

14. Media player (110) comprising an electronic device (100m) for synchronizing a plurality of multimedia components rendered on at least two multimedia rendering devices (130a, 130b, 130c), said multimedia component being selected among audio and video components of a digital multimedia processed by the media player, each of the multimedia component being rendered on a multimedia rendering device (130a, 130b, 130c) receiving the multimedia component from the media player through a respective path (150a, 150b, 150c),
**characterized in that** the electronic device comprises a processor (202) or a dedicated computing machine configured for:
- obtaining (S420), for each multimedia rendering device, a delay data representative of a propagation delay of the multimedia component from the reception of the multimedia component to the physical rendering of the multimedia component by the multimedia rendering device,
- determining (S450) at least one buffering delay representative of a difference between a maximum value and a minimum value among the delay data of the plurality of delay data; and
providing (S460) the buffering delay to at least one buffer (100bf) implemented along a path of the multimedia component corresponding to the minimum value among the delay data of the plurality of delay data.

15. Multimedia rendering device comprising an input to receive a multimedia component and an output for rendering the multimedia component, said multimedia rendering device having a propagation delay representative of a maximum propagation delay of the multimedia component from the reception of the multimedia component to the rendering of the multimedia component, said multimedia rendering device comprising a memory (301, 303) to store the propagation delay and a processor (302) or a dedicated computing machine configured to transmit the propagation delay to a multimedia component source connectable to the input in order to participate to a synchronization of a plurality of multimedia components rendered on a plurality of multimedia rendering devices.
